# EUROPEAN PATENT SPECIFICATION

(11) **EP 0 409 988 B1**
(45) Date of publication and mention of the grant of the patent: **10.01.1996**
(21) Application number: 89905778.0
(22) Date of filing: 17.05.1989
(51) Int. Cl.: G05B 19/4155

(54) **CONTROLLLER OF MACHINING CENTER**
VERWALTUNGSEINHEIT EINER WERKZEUGSTÄTTE
UNITE DE COMMANDE DE CENTRE D'USINAGE

(30) Priority: 19.05.1988 JP 122731/88
(43) Date of publication of application: 30.01.1991
(73) Proprietor: FANUC LTD., Minamitsuru-gun, Yamanashi 401-05 (JP)
(72) Inventor: KAWAMURA, Hideaki, Hachioji-shi Tokyo 193 (JP); FUJIBAYASHI, Kentaro, Musashino-shi Tokyo 180 (JP); SANO, Masafumi Fanuc Dai-3 Vira-karamatsu, Minamitsuru-gun Yamanashi 401-05 (JP)
(74) Representative: Billington, Lawrence Emlyn
(86) International application number: JP8900499
(87) International publication number: WO8911687

(56) References cited:
- DE-A- 2 702 525
- JP-A- 5 246 589
- JP-A-62 136 340
- US-A- 4 590 572
- Encyclopedia of Computer Science and Technology, Dekker, 1978, Volume 11, page 8.

## Description

### CONTROL APPARATUS FOR COMPLEX MACHINE TOOL

This invention relates to a complex machine tool control apparatus in which a plurality of heads or cutters are connected to control axes of respective ones of a plurality of control systems and are controlled independently by individual control programs.

In a conventional complex machine tool, synchronous control is performed through a queuing timing setting method in which identical codes are written in each of the programs corresponding to channels for controlling, say, two heads. When one of the heads receives a command from the codes, execution of control is interrupted and control is resumed simultaneously at the moment the other head receives the same codes. Moreover, in a method wherein the same M code (auxiliary function code), by way of example, is set in each of the programs and coincidence is achieved in terms of command timing between two independently executed programs, synchronous control can be realized only in program block units. In addition, the M code set in this case is placed at the beginning of the program block and is issued as a command only between blocks. As a result, queuing timing is executed only at the breaks between blocks.

With a conventional complex machine tool control apparatus of this kind, it is difficult to machine more complicated shapes smoothly and rapidly by controlling a machine tool having two or more control systems. The reason is that it is necessary to distinguish between the control systems of two or more heads or cutters. A problem that arises is that the program execution steps are lengthened in order to actually carry out this identification. Moreover, this is accompanied by a need for a greater number of machining steps performed by the machine tool.

For these reasons, various schemes for employing a plurality of heads or cutters efficiently have been devised in the art. With the above-described conventional queuing timing setting method, however, limitations are encountered in shortening the program execution steps and machining time.

The present invention has been devised in order to solve the foregoing problems and its object is to provide a complex machine tool control apparatus in which, in queuing control of the operation of a plurality of heads or cutters, it is possible to command standby and cancellation of standby between systems in any combination, and to make settings at any timing.

US-A-4,590,572 discloses a complex machine tool control apparatus in accordance with the precharacterising part of the attached claim 1. There is disclosed an arrangement with which standby control data for machining with a lathe having a plurality of axes, e.g. four axes, can be stored simply by giving standby commands, through operator-controlled pushbutton switches, at desired times in the first run or graphics-based simulation of a new machining program. In this manner standby control can be performed in actual machining operation.

According to the present invention there is provided a complex machine tool control apparatus in which a plurality of heads or cutters of the machine tool are driven in dependence upon respective ones of a corresponding plurality of control systems controlled by respective ones of a corresponding plurality of independently executable programs, each of said programs comprising a standby command or a standby-cancellation command whereby it is possible to designate standby and cancellation of standby between said control systems and to synchronously issue a standby command or standby-cancellation command to each of said control systems; characterised in that each of said programs further comprises timing setting means, for setting standby command timing or standby-cancellation timing between control systems brought into coincidence by one or more standby commands and standby-cancellation commands, the timing setting means being provided for each standby command and standby-cancellation command as either a subsequent command in the same program to result in a delay in the standby command or the standby-cancellation command being brought into force, or as lack of such a subsequent command to bring the standby command or the standby-cancellation command into force without such delay.

Standby timing or standby-cancellation timing set by the program of one specific system may decide the timing of control by the program of another specific system.

In accordance with a complex machine tool control apparatus of the present invention, queuing among a plurality of channels may be commanded by any combination or at any timing after blocks which have achieved coincidence. In particular, when a complex machine tool having three or more heads or cutters is controlled, loss of use of heads or cutters may be eliminated so that machining can be performed efficiently. By controlling the complex machine tool in this manner, machining of a workpiece having a complicated shape requiring a number of steps can be carried out in a shorter period of time.

### Brief Description of the Drawings

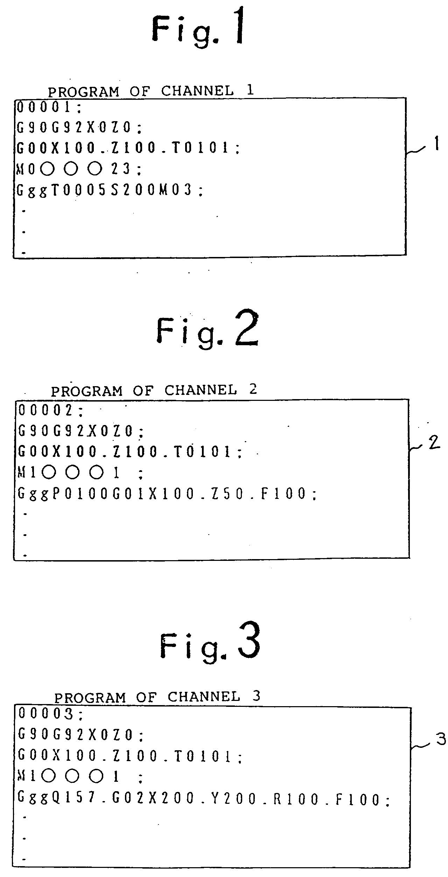

Figs. 1 through 3 show examples of programs illustrating an embodiment of the present invention.

An embodiment of the present invention will now be described in detail with reference to the drawings.

Queuing among a plurality of channels is executed by two types of program commands, set forth below, or programs which include parameters. These commands are set beforehand in the programs controlling the individual channels.

### (1) Standby command (M1)

This command is issued at the beginning of a program block and temporarily places axis control of the corresponding system (channel) in a standby state. This program command is read out of the program as the function instruction of a code M1, by way of example. At the channel which has received this command, execution of the program that will resume is interrupted until there is a standby-cancellation command from a channel of another channel number contained in the same block which follows the command code M1 or from one or more channels set by parameters.

In actuality, the start of the standby state is set by a preliminary function code Ggg, described later, and a prescribed timing following issuance of M1 can be selected.

### (2) Standby-cancellation command (M0)

This command is issued at the beginning of a program block and releases axis control of another system (channel), here designated, from the standby state. This program command is read out of the program as the function instruction of a code M0, by way of example, and commands cancellation of standby of a channel whose channel number follows the command code M0 or of one or more channels set by parameters here contained. A channel thus released from the standby command resumes execution of the interrupted program.

It is possible to select the timing of standby cancellation by a program command or parameter just as in the case of the standby command.

### (3) Standby command priority mode and standby-cancellation command priority mode

A standby command priority mode refers to a mode in which, when it is set so that a plurality of channels are designated in the standby command M1 and standby cancellation is commanded, the standby state continues until the cancellation command is received from all designated channels. The standby cancellation command priority mode refers to a mode in which, when it is set so that a plurality of channels are designated in the standby command M1 and standy cancellation is commanded, the standby state is maintained until the cancellation command is received from any designated channel. Either of these modes is selected by a program command or parameter.

### (4) Standby start or cancellation timing command method

The timing at which the standby state is actually started or cancelled by the abovementioned commands (1) and (2) between systems for which coincidence has been verified differs depending upon whether the command of the program block following M0, M1 is a move command or not.

More specifically, if the command of the program block following M0, M1 is not a move command but, say, an S-function code which designates the rotational speed of a spindle, the timings of standby start and standby cancellation can be staggered from block starting time by a length of time designated by a program command or parameter. An example of this method is one in which a G code of the kind set forth below and the timing setting which follows it are inserted at the beginning of the next program block.

If the command of the program block which follows M0, M1 is a move command such as G01 or G02, it is possible to set standby-start timing and standby-cancellation timing by designating a designated remaining amount of movement or number of distributed pulses. This is in addition to the method of designating time by a program command or parameter. An example of this method is one in which a specific G code is inserted at the beginning of the next program block along with the designation of the remaining amount of movement or number of distributed pulses that follows this G code.

A method of setting queuing among the programs of three channels will now be described in line with specific programs capable of practicing the present invention and with reference to the drawings.

In Figs. 1 through 3, numeral 1 denotes a program of channel 1; 2 a program of channel 2; and 3 a program of channel 3. It will be assumed here that all of the commands have been set in the standby command priority mode.

The programs 1, 2 and 3 each are such that a corresponding system is designated by an initial block, with a coordinate system being set and positioning carried out by second and third blocks. G90 is a code for designating absolute dimensions, and more specifically a command for treating coordinates in a block as absolute dimensions. G92 is a command code for revising or setting a coordinate system by a programmed dimension word. G00 is a positioning code and sets a prescribed tool at a prescribed location by a T code which designates the tool number.

Thereafter, in channels 2 and 3, M10001; of the fourth program block commands standby. In actuality, however, the condition for setting the timing of standby start is designated in the next or fifth block. Therefore, in channel 2, the standby state is not immediately established by the command P0100 which follows the timing setting code Ggg; rather, linear interpolation based on G01 is started and the standby state is achieved after distribution of 100 pulses in the interpolation. In other words, after the set timing has arrived, the standby state is in effect until appearance of the standby-cancellation command M0 having the same queue number 000 in the program block of channel 1 designated by the standby command M10001.

In channel 3, the standby state is not immediately established by the command Q157. which follows the timing setting code Ggg; rather, circular interpolation based on G02 is started and the standby state is established after the remaining amount of movement becomes 157 mm.

In the fourth block of channel 1, the standby-cancellation command M000023; commands cancellation of standby. However, in accordance with the Ggg command in the next block and the following T0005S200M03, cancellation of standby in channels 2 and 3 is actually commanded five seconds after the spindle begins rotating clockwise at a predetermined speed. If the channel designated in this case is not being held in standby, an alarm is issued or the cancellation command is nullified. Alternatively, the fact that cancellation has been commanded in stored and standby is cancelled at the moment that the designated channel is placed in standby. It is so arranged that this distinction can be set by program or by parameter.

If neither the abovementioned standby command nor standby cancellation command have a specific G-code command such a Ggg in the block which follows it, the standby-start state or standby-cancel state is established immediately prior to start of the next block.

In the examples of the programs mentioned above, the number of channels is three. However, there are cases in which the number of channels is more than three in dependence upon the number of systems in the machine tool, and it goes without saying that the designation of channel numbers can also be set at will. In addition, with regard to the hardware configuration of the actual control apparatus, the invention can be realized by hardware possessing ordinary processing functions such as a program decoding function and function for comparing each of the set values.

The present invention is useful as an apparatus for program control of a complex machine tool having a plurality of heads or cutters.

## Claims

1. A complex machine tool control apparatus in which a plurality of heads or cutters of the machine tool are driven in dependence upon respective ones of a corresponding plurality of control systems controlled by respective ones of a corresponding plurality of independently executable programs (1,2,3), each of said programs (1,2,3) comprising a standby command (M1) or a standby-cancellation command (M0) whereby it is possible to designate standby and cancellation of standby between said control systems and to synchronously issue a standby command (M1) or standby-cancellation command (M0) to each of said control systems;
characterised in that each of said programs (1,2,3) further comprises timing setting means, for setting standby command timing or standby-cancellation timing between control systems brought into coincidence by one or more standby commands (M1) and standby-cancellation commands (M0), the timing setting means being provided for each standby command (M1) and standby-cancellation command (M0) as either a subsequent command (Ggg) in the same program to result in a delay in the standby command (M1) or the standby-cancellation command (M0) being brought into force, or as lack of such a subsequent command (Ggg) to bring the standby command (M1) or the standby-cancellation command (M0) into force without such delay.

2. A complex machine tool control apparatus according to claim 1, characterized in that said standby command (M1) or standby-cancellation command (M0), by specifying two or more other system numbers contained in each program (1,2,3), synchronously commands standby or cancellation of standby with regard to these systems.

3. A complex machine tool control apparatus according to claim 2, characterized in that said standby command (M1) or standby-cancellation command (M0), in dependence upon a standby command priority mode or standby-cancellation command priority mode set by each program (1,2,3), synchronously commands standby or cancellation of standby with regard to any one or all of two or more specified systems.

4. A complex machine tool control apparatus according to any preceding claim, characterized in that said timing setting means sets the timing for executing a synchronously commanded standby command (M1) or standby-cancellation command (M0) upon selecting time after a command, a number of distributed pulses or a remaining amount of movement.

## Patentansprüche

1. Komplexe Werkzeugmaschinen-Steuereinrichtung, bei der eine Vielzahl von Köpfen oder Schneidwerkzeugen der Werkzeugmaschine in Abhängigkeit von betreffenden einer Vielzahl von Steuersystemen getrieben werden, die durch betreffende einer entsprechenden Vielzahl von unabhängig ausführbaren Programmen (1, 2, 3) gesteuert werden, wobei jedes der Programme (1, 2, 3) einen Bereitstellungsbefehl (M1) oder einen Bereitschaftsaufhebungsbefehl (M0) umfaßt, wodurch es möglich ist, die Bereitstellung oder die Aufhebung der Bereitschaft zwischen den Steuersystemen zu bestimmen und einen Bereitstellungsbefehl (M1) oder einen Bereitschaftsaufhebungsbefehl (M0) an jedes der Steuersysteme synchron auszugeben,
dadurch **gekennzeichnet,** daß jedes der Programme (1, 2, 3) ferner ein Zeitpunkt-Einstellmittel umfaßt zum Einstellen eines Bereitstellungsbefehls-Zeitpunkts oder eines Bereitschaftsaufhebungs-Zeitpunkts zwischen Steuersystemen, die durch einen oder mehrere Bereitstellungsbefehle (M1) und Bereitschaftsaufhebungbefehle (M0) in Koinzidenz gebracht sind, wobei das Zeitpunkt-Einstellmittel für jeden Bereitstellungsbefehl (M1) und Bereitschaftsaufhebungsbefehl (M0) als entweder ein nachfolgender Befehl (Ggg) in demselben Programm zum Erreichen einer Verzögerung des Bereitstellungsbefehls (M1) oder des Bereitschaftsaufhebungsbefehl (M0), der erteilt ist, oder als das Nichtvorliegen eines solchen nachfolgenden Befehls (Ggg), um den Bereitstellungsbefehl (M1) oder den Bereitschaftsaufhebungsbefehl (M0) ohne eine solche Verzögerung wirksam zu machen, vorgesehen ist.

2. Komplexe Werkzeugmaschinen-Steuereinrichtung nach Anspruch 1, dadurch **gekennzeichnet,** daß der Bereitstellungsbefehl (M1) oder der Bereitschaftsaufhebungsbefehl (M0) durch Bestimmen zweier oder mehrerer weiterer Systemnummern, die in jedem Programm (1, 2, 3) enthalten sind, synchron die Bereitstellung oder die Aufhebung der Bereitschaft hinsichtlich dieser Systeme befiehlt.

3. Komplexe Werkzeugmaschinen-Steuereinrichtung nach Anspruch 2, dadurch **gekennzeichnet,** daß der Bereitstellungsbefehl (M1) oder der Bereitschaftsaufhebungsbefehl (M0) in Abhängigkeit von einer Bereitstellungsbefehls-Prioritätsbetriebsart, die durch jedes Programm (1, 2, 3) gesetzt ist, synchron die Bereitstellung oder die Aufhebung der Bereitschaft hinsichtlich igendeines oder aller von zwei oder mehr bestimmten Systemen befiehlt.

4. Komplexe Werkzeugmaschinen-Steuereinrichtung nach einem der vorhergehenden Ansprüche, dadurch **gekennzeichnet** , daß das Zeitpunkt-Einstellmittel den Zeitpunkt zum Ausführen eines synchron erteilten Bereitstellungsbefehls (M1) oder Bereitschaftsaufhebungsbefehls (M0) auf die Auswahl der Zeit nach einem Befehl, einer Anzahl von verteilten Impulsen oder eines verbleibenden Bewegungsbetrags hin setzt.

## Revendications

1. Appareil de commande d'une machine-outil complexe, dans lequel plusieurs têtes ou lames de la machine-outil sont entraînées en fonction de systèmes de commande respectifs parmi plusieurs systèmes de commande correspondants commandés par des programmes exécutables respectifs parmi plusieurs programmes correspondants (1, 2, 3) exécutables de manière indépendante, chacun desdits programmes (1, 2, 3) comprenant une commande de secours (M1) ou une commande d'annulation de secours (M0), par laquelle il est possible d'appeler le secours et l'annulation du secours entre lesdits systèmes de commande et d'envoyer de manière synchrone une commande de secours (M1) ou une commande d'annulation de secours (M0) à chacun desdits systèmes de commande;
caractérisé en ce que chacun desdits programmes (1, 2, 3) comprend, en outre, un moyen de réglage de la synchronisation pour régler la synchronisation de la commande de secours ou la synchronisation de l'annulation de secours entre les systèmes de commande amenés en coïncidence par une ou plusieurs commandes de secours (M1) ou par une ou plusieurs commandes d'annulation de secours (M0), le moyen de réglage de la synchronisation étant prévu, pour chaque commande de secours (M1) et pour chaque commande d'annulation de secours (M0), soit sous forme d'une commande ultérieure (Ggg) dans le même programme pour donner lieu à un retard dans la commande de secours (M1) ou à l'activation de la commande d'annulation de secours (M0), soit sous forme de carence d'une telle commande ultérieure (Ggg) pour activer la commande de secours (M1) ou la commande d'annulation de secours (M0) sans l'affecter d'un tel retard.

2. Appareil de commande d'une machine-outil complexe selon la revendication 1, caractérisé en ce que ladite commande de secours (M1) ou ladite commande d'annulation de secours (M0), en spécifiant deux ou plusieurs autres numéros de systèmes contenus dans chaque programme (1, 2, 3), commande de manière synchrone le secours ou l'annulation du secours par rapport à ces systèmes.

3. Appareil de commande d'une machine-outil complexe selon la revendication 2, caractérisé en ce que ladite commande de secours (M1) ou ladite commande d'annulation de secours (M0), en fonction d'un mode de priorité de commande de secours ou d'un mode de priorité de commande d'annulation de secours réglé par chaque programme (1, 2, 3), commande de manière synchrone le secours ou l'annulation du secours par rapport à n'importe quels systèmes spécifiés qui en comptent deux ou plus ou par rapport à tous ces systèmes.

4. Appareil de commande d'une machine-outil complexe selon l'une quelconque des revendications précédentes, caractérisé en ce que ledit moyen de réglage de synchronisation règle la synchronisation pour exécuter une commande de secours (M1) ou une commande d'annulation de secours (M0), commandées de manière synchrone, après avoir sélectionné le laps de temps qui suit une commande, le nombre d'impulsions émises ou encore la quantité de mouvement restante.
